## Europäisches Patentamt

## European Patent Office

## Office européen des brevets

(19)

(11) Veröffentlichungsnummer: **0 176 046**
**B1**

(12) # EUROPÄISCHE PATENTSCHRIFT

(45) Veröffentlichungstag der Patentschrift:
08.03.89

(21) Anmeldenummer: **85111912.3**

(22) Anmeldetag: **20.09.85**

(51) Int. Cl.⁴: **F 42 B 25/20,** F 42 B 13/32,
B 64 D 19/02

(54) **Gefechtskopf.**

(30) Priorität: **22.09.84 DE 8427960 U**

(43) Veröffentlichungstag der Anmeldung:
**02.04.86 Patentblatt 86/14**

(45) Bekanntmachung des Hinweises auf die Patenterteilung:
**08.03.89 Patentblatt 89/10**

(84) Benannte Vertragsstaaten:
**DE FR GB IT NL SE**

(56) Entgegenhaltungen:
**DE-A-3 221 453**
**FR-A-2 071 096**
**US-A-2 044 819**
**US-A-2 440 292**
**US-A-3 276 367**
**US-A-3 855 933**

(73) Patentinhaber: **Rheinmetall GmbH, Ulmenstrasse 125 Postfach 6609, D-4000 Düsseldorf (DE)**

(72) Erfinder: **Fischer, Siegmar, Dipl. Ing.,
Niederrheinstrasse 278, D-4000 Düsseldorf (DE)**
Erfinder: **Prochnow, Jürgen, Schweissfaching.,
Akazienstrasse 2, D-4000 Düsseldorf 22 (DE)**
Erfinder: **Romer, Rudolf, Dipl. Ing., Rosegger
Strasse 3, D-4044 Kaarst (DE)**
Erfinder: **Hager, Hans Günter, Sachbearbeiter,
Willbecker Strasse 77, D-4006 Erkrath 2 (DE)**
Erfinder: **Johannes, Alfred, Ing., Schmarbecker
Weg 82, D-3111 Eimke (DE)**

EP 0 176 046 B1

**Beschreibung**

Die Erfindung betrifft einen Gefechtskopf mit den Merkmalen des Oberbegriffs des Patentanspruchs 1.

Ein bekannter Gefechtskopf nach der DE-A-2 242 930 umfaßt einen Gefechtskopfgehäuse zur Aufnahme einer Hohlladung sowie ein mit dem Gefechtskopfgehäuse verbundenen Zünder. Der Gefechtskopf wird in einer größeren Anzahl von einem Flugkörper oder Lastengeschoß über ein Zielgebiet transportiert, dort ausgestoßen und sinkt auf das Zielgebiet hinab. Zur Stabilisierung seines Sinkflugs ist der bekannte Gefechtskopf mit einem mehrere in radialer Richtung entfaltbare Flügel umfassenden Leitwerk ausgestattet. Dabei bestehen die Flügel aus einem flexiblen Material, wie beispielsweise Federstahl, und sind in Ruhelage um den Mantel des Zündergehäuses des Gefechtskopfes aufgewickelt. Das bekannte Leitwerk ist störanfällig und kann auch die Sinkgeschwindigkeit des Gefechtskopfes nicht beeinflussen.

Aus der US-A-2 044 819 ist eine mit einem Leitwerk ausgerüstete Bombe bekannt. Dort dient das Leitwerk dazu, einen Fallschirm zu ersetzen. Das Leitwerk besteht aus an den Gefechtskof anklappbaren Flügeln, die um eine auf dem Gefechtskopf befestigte, in der Längsachse des Gefechtskopfs liegende Achse drehbar gelagert sind, und die jeweils um eine senkrecht zur Achse angeordnete weitere Achse klappbar sind. Bei dieser Konstruktion erstrecken sich die Flügel, die ebenfalls aus Federstahl o. dgl. sind, nahezu über die gesamte Länge der Bombe. Sie sind nicht durch ein Gehäuse geschützt. Die Bombe kann den Abschußbelastungen aus einem Lastengeschoß nicht standhalten.

Bei beiden bekannten Anordnungen besteht die Gefahr, daß die leichten aus Federstahl bestehenden Flügel des Leitwerks infolge des Dralls beim Ausstoßen bzw. beim Abschuß sich an die Innenwand des Lastengeschosses bzw. an die Wand des Abschußrohres anlegen, wodurch Störungen und Beschädigungen eintreten können.

Der Erfindung liegt daher die Aufgabe zugrunde, einen Gefechtskopf mit einem verbesserten robusteren Leitwerk anzugeben, das in Ruhelage platzsparend unterbringbar ist, das nach Entfaltung aber eine größere Stabilität aufweist, insbesondere zur Drallreduktion bei aus rotierenden Flugkörpern bzw. Lastengeschossen ausgestoßenen Gefechtsköpfen brauchbar ist und den dabei auftretenden höchsten Beschleunigungsbeanspruchungen standhalten kann.

Die zur Lösung der gestellten Aufgabe wesentlichen Merkmale der Erfindung sind im Patentanspruch 1 genannt, der Unteranspruch nennt eine Ausführungsart der Erfindung.

Die Zeichnung zeigt Ausführungsformen des neuen Gefechtskopfes. Dabei zeigt:

Fig. 1: einen Gefechtskopf in Seitenansicht;
Fig. 2: einen weiteren Gefechtskopf in Seitenansicht.

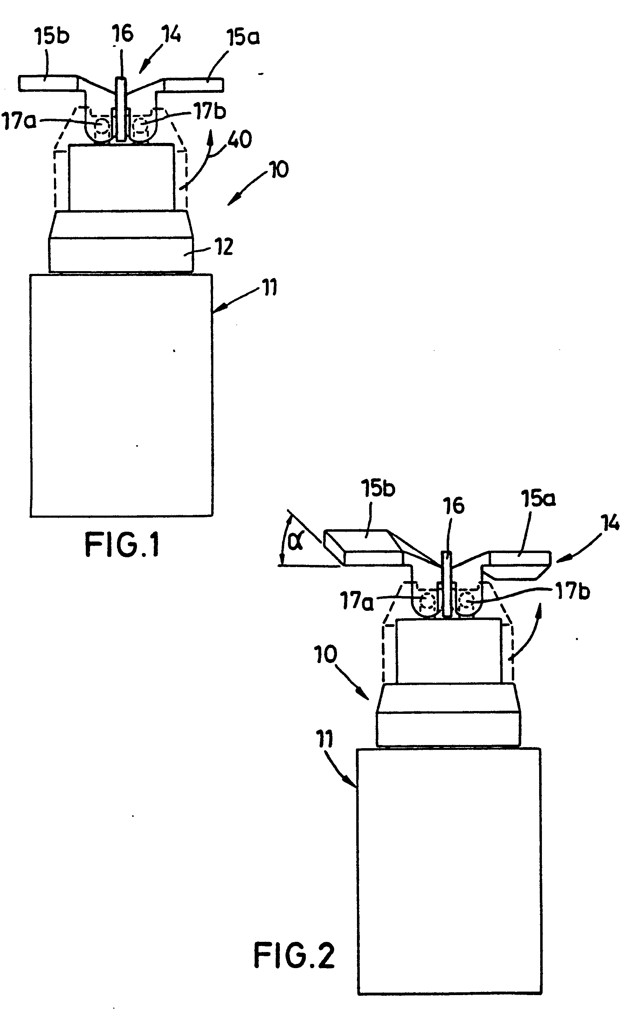

Fig. 1 zeigt in Seitenansicht einen Gefechtskopf 10, der ein Gefechtskopfgehäuse 11 zur Aufnahme einer eine Auskleidung aufweisenden Hohlladung und einen mit dem Gefechtskopfgehäuse 11 Verbundenen Zünder 12 umfaßt. Im Kopf des Zünders 12 ist eine mit der Längsachse des Gefechtskopfes 10 fluchtende Achse 16 angeordnet. Auf dieser Achse 16 sind mindestens zwei ein Leitwerk 14 bildende Flügel 15 a, 15 b drehbar gelagert. Die Flügel 15 a, 15 b sind ausklappbar ausgebildet und zu diesem Zweck auf parallel verlaufenden, senkrecht auf der Achse 16 stehenden Achsen 17 a, 17 b drehbar angeordnete. Die Ruhelage der Flügel 15 a, 15 b ist in Fig. 1 durch die gestrichelte Kontur schematisch angedeutet. In dieser Ruhelage sind die Flügel an den Zünder 12 angeklappt und schmiegen sich an dessen Kontur an. In ihre Betriebslage gelangen die Flügel 15 a, 15 b durch Aufklappen in Richtung des mit 40 bezeichneten Pfeils. In einem ersten Ausführungsbeispiel der Neuerung liegen die Flügelflächen der Flügel 15 a, 15 b in einer auf der Längsechse des Gefechtskopfes 10 senkrecht stehenden Ebene. In einem weiteren Ausführungsbeispiel der Neuerung (Fig. 2) sind die Flachen der Flügel 15 a, 15 b unter einem Winkel α, in Bezug auf eine senkrecht auf der Achse 16 etehende Ebene angestellt. Die letztgenannte Ausführungsform ermögliche eine besonders genaue Abstimmung der Umdrehungszahl des Gefechtskopfes 10 auf seinem Sinkflug.

Insbesondere mit drallstabilisierten Lastangeschossen über das Zielgebiet transportierte Gefechtsköpfe 10 erhalten nach ihrem Ausstoß aus dem Lastengeschoß von diesem einen Drall mitgeteilt, der zunächst auf niedrigere Werte reduziert werden muß, da Hohlladungsgefechts köpfe nur einen geringen Drall aufweisen dürfen, um ihre Wirkung nicht nachteilig zu beeinflussen. Mit den dargestellten Ausführungsformen der Flügel ist es möglich, diese Drallreduzierung zu erreichen und einen definierten Restdrall einzustellen. Gleichzeitig können die Flügel 15 a, 15 b noch dazu dienen, die Sinkgeschwindigkeit zu reduzieren, falls dies erwünscht ist. Der Fachmann kann dazu zahlreiche Parameter wie Spannweite der Flügel 15 a, 15 b, den Neigungswinkel α der Flügelflächen gegenüber einer senkrecht auf der Längsachse des Gefechtskopfes 10 stehenden Ebene oder das Verhältnis von Flügelflächs zu freier Fläche (bezogen auf einen Vollkreis) beeinfluseen.

Die vorgeschlagene Flügelkonstruktion ist darüber hinaus mechanisch robust und kann höchsten Beechleunigungsbeanspruchungen, die beim Abschuß des Lastengeschosses oder beim Ausstoß der Gefechtsköpfe auftreten, standhalten.

**Patentansprüche**

Gefechtskopf mit einem Leitwerk und mit einer Hohlladung in einem Gefechtskopfgehäuse (11) und mit einem Zündergehäuse (12) an der Rückseite des Gefechtskopfgehäuses (11), bei dem in den Raum vor der Einlage der Hohlladung das Zündergehäuse (12) eines gleich ausgebildeten Gefechtskopfes (11) derart einschiebbar ist, daß die Stirnkanten (11a, 11b) benachbarter Gefechtskopfgehäuse (11) aufeinander abgestützt sind, dadurch gekennzeichnet, daß das Zündergehäuse (12) einen hinteren abgesetzten Bereich aufweist, und daß um eine an der Stirnseite des Zündergehäuses (12) befestigte in der Längsachse des Gefechtskopfes liegende Drehachse (16) drehbar gelagerte und um senkrecht zur Drehachse (16) angeordnete Achsen (17a, 17b) schwenkbar befestigte Flügel (15a, 15b) des Leitwerks (14) derart in den abgesetzten Bereich des Zündergehäuses (12) einschwenkbar sind, daß die ursprüngliche Kontur des Zündergehäuses, das gegenüber dem Außendurchmesser des Gefechtskopfgehäuses einen geringeren Durchmesser aufweist, wieder hergestellt ist.

2. Gefechtskopf nach Anspruch 1, dadurch gekennzeichnet, daß die Flächen der Flügel (15a, 15b) in Bezug auf eine zur Drehachse (16) senkrecht aufgespannte Ebene um einen Winkel angestellt sind.

**Claims**

1. Warhead with a tail unit, a hollow charge in a warhead housing (11) and a detonator housing (12) at the rear of the warhead housing (11), the detonator housing (12) of an identically designed warhead (11) being insertable into the space in front of the hollow charge insert in such a way that the front edges (11a, 11b) of adjacent warhead housings (11) are supported on each other, characterised by the fact that the detonator housing (12) has a rear offset zone and that blades (15a, 15b) of the tail unit, which are rotatably mounted about a fulcrum (16) secured to the front of the detonator housing (12) and situated on the longitudinal axis of the warhead, and which are further mounted pivotably about shafts (17a, 17b) situated perpendicular to the fulcrum (16), can be pivoted into the offset zone of the detonator housing (12) in such a way so as to restore the original contour of the detonator housing which has a smaller diameter than the external diameter of the warhead housing.

2. Warhead in accordance with Claim 1, characterised by the fact that the surfaces of the blades (15a, 15b) are set at an angle in relation to a plane perpendicular to the fulcrum (16).

**Revendications**

1. Tête offensive, avec un empennage et avec une charge creuse dans un boîtier de tête offensive (11), et avec un boîtier d'allumeur (12) situé sur le côté arrière du boîtier de tête offensive (11), pour lequel le boîtier d'allumeur (12) d'une tête offensive (11), réalisée de manière identique est susceptible d'être introduit dans l'espace situé devant le revêtement de la charge creuse, de telle sorte que les arêtes frontales (11a, 11b) et le boîtier de tête offensive (11) voisin soient appuyés l'un sur l'autre, caractérisée en ce que le boîtier d'allumeur (12) possède une zone arrière étagée, et que des ailerons (15a, 15b) de l'empennage (14) sont fixés de manière basculante, autour d'un axe de rotation (16) fixé sur le côté frontal du boîtier d'allumeur (12) sorte, situé dans l'axe longitudinal de la tête offensive, et autour d'axes (17a, 17b) disposés perpendiculairement à l'axe de rotation (16), de telle sorte qu'ils soient rabattables dans la zone étagée du boîtier d'allumeur (12), que le contour original du boîtier d'allumeur, qui possède un diamètre plus faible que le diamètre extérieur du boîtier de tête offensive, soit rétabli.

2. Tête offensive selon la revendication 1, caractérisée en ce que les surfaces des ailerons (15a, 15b) sont calés en faisant un angle, par rapport au plan s'étendant perpendiculairement à l'axe de rotation (16).

FIG.1

FIG.2